# FASCICULE DE BREVET EUROPEEN

(11) **EP 4 179 484 B1**
(45) Date de publication et mention de la délivrance du brevet: **29.01.2025**
(21) Numéro de dépôt: 21743127.9
(22) Date de dépôt: 08.07.2021
(51) Int. Cl.: G06Q 10/087, B65G 65/00, B65G 1/137, B65G 1/04, B25J 5/00

(54) **ROBOT AUTONOME MOBILE POUR LA PRÉPARATION DE COMMANDES ET PROCÉDÉ DE PRÉPARATION DE COMMANDES**
MOBILER AUTONOMER ROBOTER ZUR KOMMISSIONIERUNG UND KOMMISSIONIERVERFAHREN
MOBILE AUTONOMOUS ROBOT FOR ORDER PICKING AND ORDER PICKING METHOD

(30) Priorité: 10.07.2020 FR 2007360
(43) Date de publication de la demande: 17.05.2023
(73) Titulaire: iFollow, 94110 Arcueil (FR)
(72) Inventeur: JACQUEMART, Vincent, 92190 Meudon (FR); MENIGOZ, Nicolas, 75013 Paris (FR)
(74) Mandataire: Vidon Brevets & Stratégie
(86) Numéro de dépôt international: PCT/EP2021/068944
(87) Numéro de publication internationale: WO 2022/008636

(56) Documents cités:
- WO-A1-2016/210126
- WO-A1-2018/087546
- WO-A2-2020/097502
- US-A1- 2017 113 352
- US-A1- 2019 291 955

## Description

### Domaine de l'invention

Le domaine de l'invention est celui de la logistique, en particulier pour la préparation de commandes au sein d'un entrepôt de stockage de produits à expédier.

La présente invention concerne notamment l'assistance à la préparation de commandes par le biais de robots autonomes (dit « Autonomous Mobile robots - AMR » en anglais), et plus particulièrement les capacités de collecte de tels robots autonomes pour l'optimisation de la préparation de commandes.

### Art antérieur

Le domaine de la logistique n'a cessé d'évoluer depuis de nombreuses années. Concernant la préparation de commandes en particulier, les évolutions techniques et technologiques ont été nombreuses, allant des logiciels de gestion aux convoyeurs de produits en passant par les étagères de stockage intelligentes.

Nous nous intéressons ici plus particulièrement à la préparation de commandes effectuée par des opérateurs et assistée par des robots autonomes. Ainsi, les opérateurs et les robots coopèrent dans un même espace de travail afin de préparer de manière optimale les différentes commandes qui sont reçues par le système de gestion de commande de l'entrepôt.

Classiquement, un opérateur est chargé de prélever les différents produits d'une commande aux différents emplacements de l'entrepôt et de les déposer sur le robot autonome qui l'accompagne.

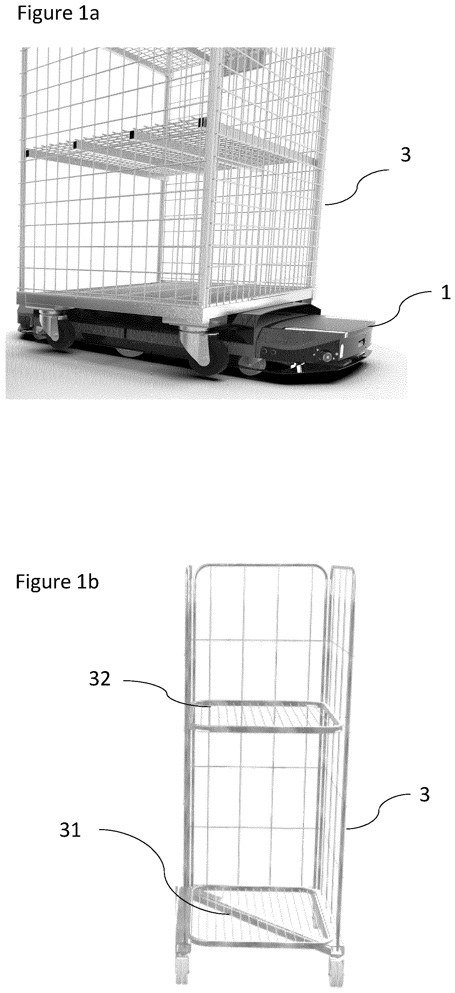

Pour ce faire, le robot autonome mobile 1 est doté par exemple d'un support de collecte 3 pour recevoir les produits déposés par l'opérateur, comme illustré en figure 1a.

Afin d'augmenter le rendement de préparation de commande, ce support de collecte 3 peut par exemple présenter plusieurs étagères 31, 32 (figure 1b), de sorte à permettre la préparation de commandes différentes.

Cependant, le domaine de la préparation de commandes est un domaine très concurrentiel et toujours en recherche de solutions permettant d'améliorer le rendement de préparation de commandes, notamment en réduisant les déplacements des opérateurs et des robots mobiles autonomes, ainsi qu'en optimisant chacune des étapes de la chaîne logistique.

Les documents de brevet US 2017/113352 A1, WO 2020097502 A2, US2019291955 A1, WO2018087546 A1 et WO 2016/21026 A1 présentent des systèmes logistiques offrant certaines améliorations, par exemple en sécurisant le contrôle des robots, en prévoyant des voies de circulation des robots, en permettant à des robots de porter plusieurs conteneurs, en utilisant un système de guidage de robot par vision par ordinateur ou encore un système de rails de guidage des robots.

Il existe donc un besoin de fournir une nouvelle approche qui puisse s'adapter en temps réel aux différentes contraintes de la préparation de commande tout en optimisant le rendement global du système, c'est-à-dire le rendement des opérateurs et des robots.

### Résumé de l'invention

La présente invention propose une solution technique permettant d'optimiser le rendement global de la préparation de système grâce à un robot autonome mobile pour la préparation de commandes de produits stockés dans un entrepôt, comprenant un dispositif de réception d'au moins deux supports mobiles de collecte des produits, dits supports de collecte, et des moyens de maintien indépendants de chacun des au moins deux supports de collecte sur le robot autonome mobile.

Ainsi, la présente technique propose une solution nouvelle et inventive pour la préparation de commandes mise en œuvre par des robots autonomes mobiles dans un entrepôt, permettant d'augmenter fortement la productivité de la préparation de commandes. Pour ce faire, les robots autonomes mobiles sont adaptés à la préparation de commandes de produits stockés dans un entrepôt, c'est à dire qu'ils présentent des caractéristiques spécifiques telles que, notamment :
- des capacités de communication avec d'autres robots d'une même flotte et avec un système de supervision en charge de la gestion d'une flotte de robots, dans le but d'optimiser la préparation de commandes dans un entrepôt ;
- une facilité de déplacement dans des allées d'entrepôt, dans lesquelles circulent d'autres robots ainsi que des préparateurs de commande ;
- une autonomie d'énergie pour pouvoir préparer le plus grand nombre de commandes sans devoir être rechargé ;
- une compacité et notamment une faible épaisseur, par exemple pour pouvoir se glisser sous des éléments à transporter.

De plus, selon la présente technique, de tels robots autonomes mobiles sont conçus pour pouvoir porter et donc déplacer au moins deux supports de collecte de produits, permettant ainsi par exemple la préparation de deux commandes distinctes directement dans deux contenants distincts.

La solution proposée permet donc d'éviter toute manutention ultérieure des produits de différentes commandes, au moment de la finalisation de ces commandes. En effet, les produits respectifs de chaque commande sont déjà regroupés dans un contenant, ce dernier pouvant être directement utilisé pour le transport de la commande (par exemple chargé dans un camion).

La préparation de commande est donc optimisée :
- en termes de nombre de préparateurs nécessaires : aucun préparateur n'est requis pour la distribution des produits de plusieurs commandes qui auraient été collectés dans un même contenant,
- en termes de temps de préparation : les manipulations des produits sont limitées, la collecte pouvant être sélective grâce à la pluralité de contenants sur un même robot mobile autonome. Le nombre de prélèvements effectués par un opérateur est augmenté tout en limitant les déplacements de cet opérateur,
- en termes de taux d'erreur dans une commande : les risques d'attribution erronée de produits à une commande sont limités du fait de la collecte sélective et de la limitation de manipulations des produits.

La présente solution permet également la collecte de produits surgelés dans un contenant frigorifique spécifique en même temps que la collecte de produits non surgelés dans un deuxième contenant, classique, sur un même robot autonome mobile.

Les supports de collecte sont spécifiques à la préparation de commandes et en particulier sont eux-mêmes mobiles, par exemple via des roulettes, de manière à pouvoir être utilisés pour le transport des produits, directement en fin de préparation de commandes. De tels supports de collecte de produits correspondent par exemple à des cages grillagées de grande hauteur, sur roulettes.

Enfin, des moyens de maintien sont prévus pour maintenir de manière indépendante chaque support de collecte de produits sur le robot autonome mobile. Ainsi, les supports de collecte de produits peuvent être chargés ou déchargés du robot autonome mobile de manière également indépendante.

Selon l'invention, le dispositif de réception est adaptable aux supports de collecte.

Ainsi, un robot mobile autonome peut recevoir tout type de support de collecte de produits grâce à un dispositif de réception adaptable selon le type de support. Par exemple, les robots d'une flotte de robots dans un entrepôt de préparation de commandes peuvent être adaptés au type de supports utilisés dans l'entrepôt, ou de manière plus spécifique encore, au type de supports utilisés pour un client...

L'adaptation du dispositif de réception à différents types de support s'entend par exemple en termes de dimension, pour recevoir des supports de dimensions différentes, en termes de forme, pour recevoir des supports de formes différentes, ou encore en termes de robustesse, pour recevoir des supports de poids différents.

Par exemple, le dispositif de réception est amovible.

Ainsi, selon ce mode de réalisation, l'adaptabilité du dispositif de réception à tout type de supports de collecte de produits est mise en œuvre via des dispositifs de réception amovibles, par exemple grâce à un système de fixation au robot adaptable à tout type de dispositif de réception, et présentant des caractéristiques différentes.

De cette manière, il suffit de choisir le dispositif de réception adapté au support de collecte de produits utilisé et de le fixer sur le robot, et lorsque le support de collecte de produits change, il suffit d'enlever le dispositif de réception et de le remplacer par un autre dispositif adapté au nouveau support de collecte de produits.

Selon un autre aspect, le dispositif de réception présente une structure modifiable pour s'adapter aux supports de collecte.

Ainsi, selon ce mode de réalisation, l'adaptabilité du dispositif de réception à tout type de supports de collecte de produits est mise en œuvre via une structure modifiable du dispositif de réception lui-même. Par exemple, les dimensions du dispositif de réception peuvent être modifiées par des systèmes de coulissement d'éléments de structure, permettant ainsi de recevoir des supports de collecte de produits de tailles différentes tout en les maintenant correctement. De même, des systèmes de renforcement de la structure du dispositif de réception peuvent être ajoutés sur le dispositif pour recevoir des supports de collecte de produits plus lourds ou destinés à être chargés lourdement ...

Selon une caractéristique particulière, les moyens de maintien sont portés par le dispositif de réception.

Ainsi, les moyens de maintien des supports de collecte de produits font partie du dispositif de réception de ces supports de collecte de produits sur le robot, permettant ainsi également l'adaptabilité des moyens de maintien à tout type de support de collecte de produits. Ce cette manière, les supports de collecte de produits sont toujours maintenus de manière optimale sur le robot autonome mobile lorsque ce dernier se déplace et lorsque des produits sont déposés dans les supports de collecte de produits.

Par exemple, les moyens de maintien se présentent sous la forme :
- d'un système magnétique coopérant avec les supports de collecte ; un aimant peut-être prévu sur le dispositif de réception de manière à exercer une force de retenue sur les supports métalliques de collecte. Si ces supports de collecte ne sont pas métalliques, ils peuvent présenter une partie métallique ou un aimant complémentaire permettant d'assurer la retenue du support sur le dispositif de réception du robot autonome mobile ;
- d'un système mécanique correspondant à des excroissances ou languettes de retenue des supports de collecte ; le dispositif de réception peut présenter des rebords plus hauts à certains endroits, ou simplement des sortes de languettes de retenue, permettant mécaniquement de retenir les supports sur le dispositif de réception du robot autonome mobile ;
- d'un système de verrouillage mécanique coopérant avec une partie des supports de collecte, comme par exemple un système de verrouillage à came.

Selon une caractéristique particulière, le dispositif de réception correspond à une structure tubulaire ou à une structure pleine solidarisée de manière amovible audit robot.

Ainsi, selon ce mode de réalisation, une sorte de panier/cagette de faible hauteur, dimensionné pour recevoir au moins deux supports de collecte de produits, est fixé au robot de manière amovible.

Une telle structure peut être métallique ou en matière plastique, et présente une robustesse adaptée au poids d'au moins deux supports de collecte de produits, y compris lorsqu'ils sont chargés de produits collectés.

De plus, une telle structure présente une faible hauteur afin de ne pas augmenter la hauteur d'accès aux supports pour y déposer les produits collectés et donc de maintenir un niveau d'ergonomie optimal pour les préparateurs de commande.

Une telle structure peut également être conçue de sorte à ce que ses dimensions puissent être adaptées (par exemple via des systèmes de coulissement de tubes métalliques pouvant donc être rallongés ou raccourcis) ou de sorte à ce que certaines parties puissent être renforcées (par exemple via des structures pleines pouvant être ajoutées sur les côtés de la structure métallique).

Selon une caractéristique particulière, le robot autonome mobile comprend un module de détection de la dépose d'au moins un produit dans au moins un desdits supports mobile de collecte. Ce module de détection permet non seulement de détecter lorsqu'un produit est déposé dans un support de collecte, mais il permet de déterminer si c'est le produit attendu qui a été déposé et s'il l'a été dans le bon support de collecte. En effet, la présence de plusieurs supports de collecte sur un même robot engendre un risque d'erreur de dépose pour un préparateur. Ce module de détection permet ainsi de contrôler les produits déposés de manière automatique, sans que le préparateur n'ait d'actions à mettre en œuvre.

La présente technique concerne également un procédé de préparation de commandes de produits stockés dans un entrepôt par au moins un robot autonome mobile tel que décrit précédemment, selon les différents modes de réalisation.

Un tel procédé comprend les étapes suivantes :
- dépose, par un préparateur de commande, d'au moins un produit d'une première commande dans au moins un premier support mobile de collecte de produits porté par au moins un robot autonome mobile ;
- dépose, par un préparateur de commande, d'au moins un produit d'une deuxième commande dans au moins un deuxième support mobile de collecte de produits porté par le robot autonome mobile.

Ainsi, selon ce mode de réalisation, le nombre de prélèvement de produits à l'heure effectués par un opérateur est fortement augmenté, tout en diminuant fortement les déplacements des opérateurs et des robots.

Selon un aspect particulier, le procédé comprend une étape de détection, mise en œuvre par le robot autonome mobile, de la dépose d'au moins un produit dans au moins un des supports mobiles de collecte. Cette étape permet ainsi le contrôle de la dépose des produits de manière automatique, sans que le préparateur n'ait à le faire ou à communiquer des données de validation de ces actions de prélèvement et de dépose.

### Liste des Figures

La technique proposée, ainsi que les différents avantages qu'elle présente, seront plus facilement compris, à la lumière de la description qui va suivre de plusieurs modes de réalisation illustratifs et non limitatifs de celle-ci, et des dessins annexés parmi lesquels :
[Fig 1a] illustre un robot autonome mobile selon une technique de l'art antérieur ;
[Fig 1b] illustre un support de collecte selon une technique de l'art antérieur ;
[Fig 2a] illustre un robot autonome mobile selon un mode de réalisation de la présente technique ;
[Fig 2b] illustre un robot autonome mobile selon un autre mode de réalisation de la présente technique ;
[Fig 3] illustre un robot autonome mobile avec deux supports de collecte, selon un mode de réalisation de la présente technique ;
[Fig 4] illustre les principales étapes du procédé de préparation de commandes, selon un mode de réalisation de la présente technique ;
[Fig 5] illustre un robot autonome mobile avec trois supports de collecte, selon un autre mode de réalisation de la présente technique.

### Description détaillée de l'invention

### A - Principe général de la technique proposée

Le principe général de la technique proposée consiste à optimiser les déplacements des opérateurs de prélèvement, ou préparateur de commande, et des robots mobiles autonomes de collecte au sein d'un entrepôt de stockage de produits à expédier afin de maximiser leur utilisation/rendement. En améliorant le rendement des opérateurs et des robots, un nombre plus important de commandes peut être effectué par unité de temps (par exemple par heure).

Pour ce faire, la technique proposée prévoit qu'un robot autonome mobile puisse porter au moins deux supports de collecte, dans lesquels un préparateur dépose les produits prélevés, contrairement aux techniques connues selon lesquelles un robot ne déplace qu'un chariot de collecte.

Ainsi, selon la présente technique, un préparateur peut préparer deux commandes distinctes directement dans deux supports distincts, ce qui rend plus efficace la finalisation des commandes. En effet, aucune manutention supplémentaire n'est requise lorsque le robot a terminé sa collecte, les produits des commandes différentes étant directement stockés de manière séparés sur les différents supports de collecte.

De plus, la présente technique permet également l'utilisation de supports de collecte mobiles, c'est à dire pouvant être aisément manipulés par un opérateur lorsqu'ils ne sont plus sur un robot mobile. Ainsi, lorsqu'une commande est terminée, le support de collecte peut par exemple être directement acheminé, par un opérateur, vers le véhicule/camion de transport pour y être chargé, sans que l'opérateur n'ait à porter le support. Par exemple, il s'agit de support de collecte présentant des roulettes.

### B - Description d'un mode de réalisation

Les robots autonomes mobiles connus ne sont donc pas conçus pour porter plus d'un support de collecte. La présente invention permet donc une compatibilité avec les robots autonomes mobiles actuels grâce à la mise en œuvre d'un dispositif de réception sur le robot pour pouvoir porter au moins deux supports mobiles de collecte.

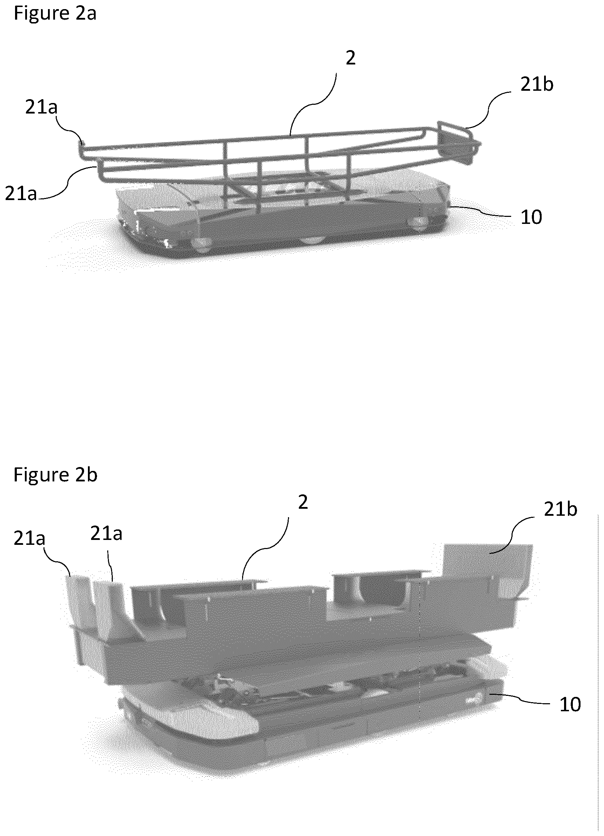

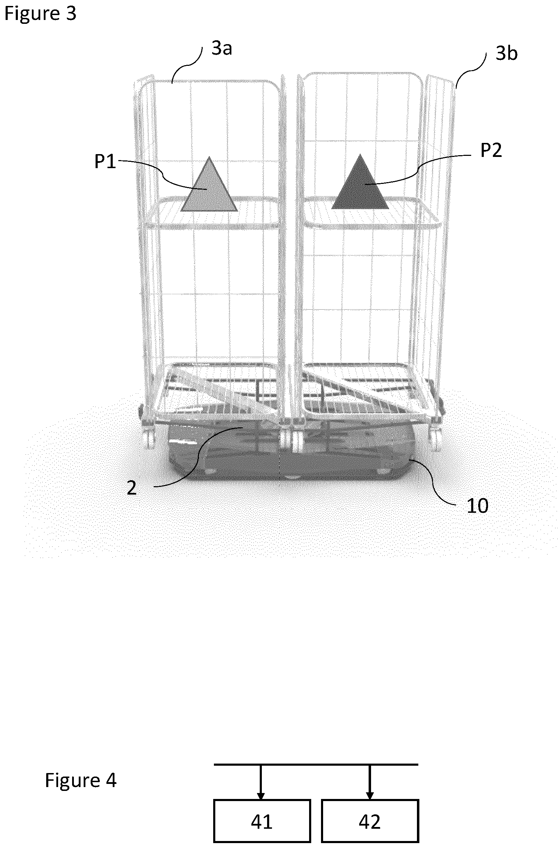

Comme illustré en figures 2a, 2b et 3, un robot autonome mobile 10 comprend donc un dispositif de réception 2 d'au moins deux supports mobiles de collecte 3a et 3b. Par exemple, ces supports mobiles de collecte sont du type de celui illustré en figure 1b, à savoir une sorte d'étagère grillagée avec des roulettes permettant son déplacement de manière autonome également. Le dispositif de réception équipant un robot autonome mobile assure donc là encore une compatibilité avec des supports mobiles de collecte connus.

En effet, de tels supports mobiles de collecte sont particulièrement adaptés à la préparation de commandes de produits stockés en entrepôt, notamment du fait de leur mobilité en autonomie et sur un robot autonome mobile. Ainsi, il est possible de les acheminer et de les charger directement dans le véhicule de transport, une fois les commandes préparées.

Cependant, du fait notamment de la mobilité intrinsèque de ces supports de collecte, il est nécessaire de prévoir un dispositif d'accueil de ces supports sur le robot autonome mobile. En effet, il faut d'une part que le robot puisse porter plus d'un support mobile de collecte et d'autre part que les supports portés par le robot autonome mobile soient maintenus en place pendant le déplacement du robot.

Comme illustré sur les figures 2a et 2b, ce dispositif de réception 2 est légèrement plus long que le robot 10, permettant ainsi de porter deux supports mobiles de collecte positionnés côte à côte.

De plus, afin d'assurer le maintien des deux supports mobiles de collecte sur le robot, celui-ci comprend également des moyens de maintien indépendants 21a, 21b, de chacun des deux supports de collecte.

Ainsi, selon un premier mode de réalisation illustré sur les figures 2a et 2b, des premiers moyens de maintien 21a sont prévus à une extrémité du support mobile de collecte, pour maintenir un premier support 3a (figure 3), et un deuxième moyen de maintien 21b est prévu à l'autre extrémité du support mobile de collecte, pour maintenir un premier support 3b (figure 3).

Selon ce mode de réalisation, les moyens de maintien 21a et 21b sont portés par le dispositif de réception 2 lui-même, par exemple sous la forme d'excroissances ou de languettes permettant de retenir les supports de collecte mobiles lorsqu'ils sont portés par le robot autonome mobile.

Selon d'autres modes de réalisation, non illustrés, les moyens de maintien peuvent prendre la forme d'un système magnétique coopérant avec les supports de collecte, par exemple lorsque ces supports sont métalliques ou lorsqu'ils présentent un système magnétique coopérant avec celui prévu sur le robot autonome mobile, ou le dispositif de réception.

Les moyens de maintien peuvent également se présenter sous la forme d'un système de verrouillage mécanique (porté par le dispositif de réception ou le robot lui-même) coopérant avec une partie des supports de collecte, comme par exemple une came ou une sorte de verrou adapté à la forme des supports de collecte portés par le robot.

Les moyens de maintien sont conçus pour retenir les deux supports de collecte lorsque le robot se déplace et notamment lorsque le robot freine et redémarre, ou, le cas échéant, en cas de collision avec un autre robot ou de chocs avec un obstacle sur le parcours du robot.

Par ailleurs, la technique proposée permet également une adaptabilité des robots autonomes mobiles à tous types de supports de collecte, soit parce que le dispositif de réception est amovible et donc interchangeable selon le type de support, soir parce que le dispositif de réception lui-même présente une structure modifiable permettant de s'adapter au type de support.

Ainsi, selon une première variante, plusieurs dispositifs de réception, de formes et de tailles différentes, sont conçus de manière à pouvoir s'adapter aux différents types de supports de collecte. Par exemple, des dispositifs de réception peuvent être fabriqués spécialement pour s'adapter à des supports de collecte utilisés dans un entrepôt. De même, il est possible d'équiper une flotte de robots autonomes mobiles de nouveaux dispositifs de réception adaptés à des nouveaux supports de collecte qui viendraient à être utilisés. Cette variante et le caractère amovible des dispositifs de réception permettent donc une adaptabilité optimale tant aux robots qu'aux supports de collecte.

Selon une deuxième variante, un dispositif de réception est conçu de sorte à pouvoir lui-même s'adapter à différents types de support de collecte, c'est-à-dire qu'il peut être allongé ou raccourci, dans toutes les dimensions, grâce à des systèmes de réglage.

Par exemple, lorsque le dispositif de réception correspond à une structure métallique tubulaire, ses dimensions peuvent être modifiées via des systèmes de coulissement des tubes qui le composent. Cette variante permet une adaptabilité plus réactive à un changement de type de support de collecte, qui ne nécessite pas de changer le dispositif de réception lui-même.

Les figures 2a et 3 illustrent un exemple de dispositif de réception 2 sous la forme d'une structure tubulaire métallique permettant de recevoir deux supports de collecte maintenus par des languettes à ces deux extrémités. Une telle forme permet d'obtenir un dispositif de réception léger et non encombrant, n'augmentant que très peu la charge du robot sur lequel il est installé.

Selon un autre mode de réalisation illustré en figure 2b, un dispositif de réception 2 peut se présenter sous la forme d'une structure pleine, non tubulaire, métallique ou en matière plastique.

Le choix de la forme et de la matière du dispositif de réception peut être guidé par des considérations de robustesse, car les supports de collecte peuvent être très lourds à la fin de la préparation d'une commande, ou selon le type de robots ou de supports de collecte utilisés.

Par ailleurs, du fait de la présence de plusieurs supports mobiles de collecte sur un même robot, les risques d'erreurs de dépose de produits par les préparateurs sont un peu augmentés. Ainsi, un préparateur peut se tromper de support de collecte pour déposer un produit prélevé. Une solution classique serait de demander au préparateur de valider chaque dépose de produit, par exemple via le terminal mobile dont il se sert pour gérer ses préparations de commande (pour scanner les produits notamment).

La présente technique propose une solution nouvelle et inventive via un module de détection de la dépose d'au moins un produit dans au moins un des supports mobiles de collecte, permettant :
- de savoir précisément où le préparateur dépose le produit sur le robot : sur le support « avant » 3a ou le support « arrière » 3b ;
- de connaître le nombre de colis/produits déposés, sur chaque support ;
- d'effectuer un contrôle pondéral via une comparaison du poids du produit déposé avec le poids théorique connu du produit attendu.

Cette solution évite donc au préparateur de commande d'effectuer une vérification du produit posé et une confirmation de la conformité de la dépose, pour chaque prélèvement, augmentant ainsi son rendement tout en optimisant la qualité de la préparation de commande.

Le module de détection de la dépose est basé sur un système de balance, par exemple un peson, en communication avec un gestionnaire de tâches intégré au robot, permettant notamment de connaître le nombre de produits attendus, leur type et leur poids théorique, en temps réel, à tout moment de la préparation de commandes.

Le module de détection peut être intégré au robot autonome mobile ou rattaché au robot autonome mobile, c'est-à-dire positionné sur le robot autonome mobile et connecté à ce dernier via des liaisons de communication.

### C - Procédé de préparation de commandes

La présente technique concerne également un procédé de préparation de commandes assisté par au moins un robot tel que décrit précédemment, selon les différents modes de réalisation et les différentes variantes.

En effet, s'il est connu d'utiliser des robots autonomes mobiles pour assister les préparateurs de commandes, la solution décrite précédemment permet d'optimiser la préparation de commandes en utilisant des robots pouvant déplacer au moins deux supports mobiles de collecte. De tels robots permettent donc qu'un préparateur dépose au moins un produit P1 d'une première commande dans au moins un premier support mobile de collecte 3a porté par le robot autonome mobile 10 qui l'assiste et au moins un produit P2 d'une deuxième commande dans au moins un deuxième support mobile de collecte 3b porté par le même robot autonome mobile 10.

De cette manière, le nombre de prélèvements à l'heure, pour un préparateur de commandes, est fortement augmenté car il peut déposer des produits dans un plus grand nombre de supports de collecte.

Cela permet également de préparer distinctement deux commandes en même temps, en posant les produits de chaque commande dans le support de collecte attitré. De cette manière, à la fin de la préparation des deux commandes, il n'y a pas de manutention supplémentaire des produits à faire, c'est à dire pas de distribution ou « dispatch » des produits de plusieurs commandes qui seraient déposés dans un même support comme dans les techniques connes de l'art antérieur.

Par ailleurs, selon un mode de réalisation particulier, le procédé de préparation de commandes comprend une étape de détection, mise en œuvre par le robot autonome mobile, de la dépose d'au moins un produit dans au moins un des supports mobiles de collecte. Cette étape de détection est mise en œuvre par exemple par un module de détection, intégré ou connecté au robot autonome mobile, en communication avec le gestionnaire de tâche du robot. De cette manière, la vérification de la dépose d'un produit dans le bon support mobile de collecte sur le robot est effectuée automatiquement, sans nécessiter d'action spécifique du préparateur de commandes lui-même, renforçant ainsi la qualité des commandes en limitant les erreurs tout en ne ralentissant pas le préparateur dans ses tâches de prélèvement et de dépose des produits.

### D - Autres caractéristiques

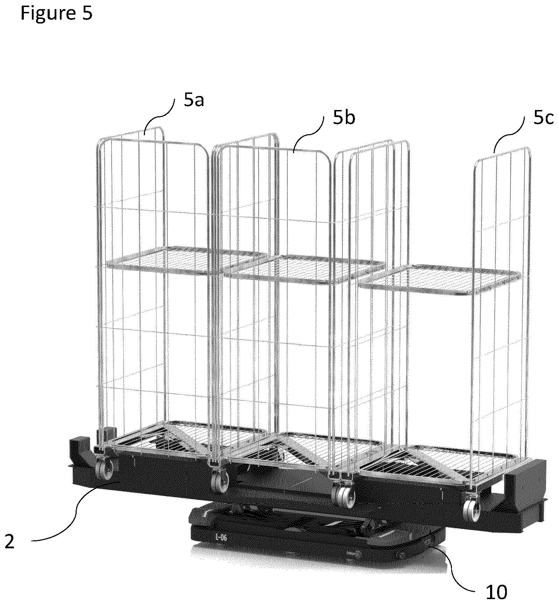

Les modes de réalisation, variantes et exemples décrits ci-dessus ne sont pas limitatifs en termes de nombre de supports mobiles de collecte pouvant être déplacés par un seul robot autonome mobile. En effet, selon la taille du robot et des supports mobiles de collecte, le dispositif de réception est adapté pour pouvoir accueillir au moins deux supports mobiles de collecte ; il est donc envisageable qu'un robot puisse déplacer par exemple trois ou quatre supports mobiles de collecte. Un exemple de robot autonome mobile 10 pourtant trois supports mobiles de collecte 5a, 5b et 5c, est illustré en figure 5. Le dispositif de réception 2 est donc adapté à recevoir trois supports de collecte, et est donc notamment beaucoup plus long que pour deux supports de collecte.

En effet, l'adaptabilité du dispositif de réception équipant un robot autonome mobile permet une compatibilité optimale avec les robots existants et à venir, les supports de collecte existants et à venir, ainsi que le nombre de supports de collecte pouvant être portés par un robot.

## Revendications

1. Robot autonome mobile (10) pour la préparation de commandes de produits stockés dans un entrepôt, comprenant un dispositif de réception (2) d'au moins deux supports mobiles de collecte (3a, 3b) desdits produits, dits supports de collecte, et des moyens de maintien indépendants (21a, 21b) de chacun desdits au moins deux supports de collecte sur ledit robot autonome mobile, **caractérisé en ce que** ledit dispositif de réception est adaptable auxdits supports de collecte.

2. Robot autonome mobile pour la préparation de commandes selon la revendication 1, **caractérisé en ce que** ledit dispositif de réception est amovible.

3. Robot autonome mobile pour la préparation de commandes selon l'une quelconque des revendications 1 et 2, **caractérisé en ce que** ledit dispositif de réception présente une structure modifiable pour s'adapter auxdits supports de collecte.

4. Robot autonome mobile pour la préparation de commandes selon l'une quelconque des revendications 1 à 3, **caractérisé en ce que** lesdits moyens de maintien sont portés par ledit dispositif de réception.

5. Robot autonome mobile pour la préparation de commandes selon l'une quelconque des revendications 1 à 4, **caractérisé en ce que** lesdits moyens de maintien se présentent sous la forme :
• d'un système magnétique coopérant avec lesdits supports de collecte ;
• d'un système mécanique correspondant à des excroissances ou languettes de retenue desdits supports de collecte ;
• d'un système de verrouillage mécanique coopérant avec une partie desdits supports de collecte.

6. Robot autonome mobile pour la préparation de commandes selon l'une quelconque des revendications 1 à 5, **caractérisé en ce que** ledit dispositif de réception correspond à une structure tubulaire ou pleine solidarisée de manière amovible audit robot.

7. Robot autonome mobile pour la préparation de commandes selon l'une quelconque des revendications 1 à 6, **caractérisé en ce qu'**il comprend un module de détection de la dépose d'au moins un produit dans au moins un desdits supports mobiles de collecte.

8. Procédé de préparation de commandes de produits stockés dans un entrepôt par au moins un robot autonome mobile (10) selon l'une quelconque des revendications 1 à 7, **caractérisé en ce qu'**il comprend les étapes suivantes :
• dépose (41), par un préparateur de commande, d'au moins un produit (P1) d'une première commande dans au moins un premier support mobile de collecte (3a) porté par ledit au moins un robot autonome mobile (10) ;
• dépose (42), par un préparateur de commande, d'au moins un produit (P2) d'une deuxième commande dans au moins un deuxième support mobile de collecte (3b) porté par ledit au moins un robot autonome mobile (10).

9. Procédé de préparation de commandes selon la revendication 8, **caractérisé en ce qu'**il comprend une étape de détection, mise en œuvre par ledit robot autonome mobile (10), de la dépose d'au moins un produit dans au moins un desdits supports mobiles de collecte.

## Patentansprüche

1. Mobiler autonomer Roboter (10) zur Kommissionierung von in einem Lagerhaus gelagerten Produkten, mit einer Aufnahmevorrichtung (2) für mindestens zwei mobile Sammelträger (3a, 3b) für die Produkte, Sammelträger genannt, und mit unabhängigen Haltemitteln (21a, 21b) für jeden der mindestens zwei Sammelträger auf dem mobilen autonomen Roboter, **dadurch gekennzeichnet, dass** die Aufnahmevorrichtung an die Sammelträger anpassbar ist.

2. Mobiler autonomer Roboter zur Kommissionierung nach Anspruch 1, **dadurch gekennzeichnet, dass** die Aufnahmevorrichtung abnehmbar ist.

3. Mobiler autonomer Roboter zur Kommissionierung nach Anspruch 1 oder 2, **dadurch gekennzeichnet, dass** die Aufnahmevorrichtung eine veränderbare Struktur aufweist, um sich an die Sammelträger anzupassen.

4. Autonomer mobiler Roboter zur Kommissionierung nach einem der Ansprüche 1 bis 3, **dadurch gekennzeichnet, dass** die Haltemittel von der Aufnahmevorrichtung getragen sind.

5. Autonomer mobiler Roboter zur Kommissionierung nach einem der Ansprüche 1 bis 4, **dadurch gekennzeichnet, dass** die Haltemittel ausgebildet sind als:
• ein magnetisches System, das mit den Sammelträgern zusammenwirkt;
• ein mechanisches System, das mit Halteausstülpungen oder -zungen der Sammelträger korrespondiert;
• ein mechanisches Verriegelungssystem, das mit einem Teil der Sammelträger zusammenwirkt.

6. Autonomer mobiler Roboter zur Kommissionierung nach einem der Ansprüche 1 bis 5, **dadurch gekennzeichnet, dass** die Aufnahmevorrichtung einer rohrförmigen oder massiven Struktur entspricht, die abnehmbar mit dem Roboter verbunden ist.

7. Autonomer mobiler Roboter zur Kommissionierung nach Anspruch 1 bis 6, **dadurch gekennzeichnet, dass** er ein Modul zur Erkennung der Ablage mindestens eines Produkts in mindestens einen der mobilen Sammelbehälter umfasst.

8. Kommissionierverfahren von in einem Lagerhaus gelagerten Produkten durch mindestens einen autonomen mobilen Roboter (10) nach einem der Ansprüche 1 bis 7, **dadurch gekennzeichnet, dass** es die folgenden Schritte umfasst:
• Ablegen (41), durch einen Kommissionierer, von mindestens einem Produkt (P1) einer ersten Bestellung in mindestens einen ersten mobilen Sammelträger (3a), der von dem mindestens einen autonomen mobilen Roboter (10) getragen wird;
• Ablegen (42), durch einen Kommissionierer, von wenigstens einem Produkt (P2) von einer zweiten Bestellung in einen zweiten mobilen Sammelträger (3b), der von dem mindestens einen autonomen mobilen Roboter (10) getragen wird.

9. Kommissionierverfahren nach Anspruch 8, **dadurch gekennzeichnet, dass** es einen Erfassungsschritt umfasst, der von dem mobilen autonomen Roboter (10) durchgeführt wird, um das Ablegen von mindestens einem Produkt in mindestens einen der mobilen Sammelträger zu erkennen.

## Claims

1. Autonomous mobile robot (10) for picking orders of products stored in a warehouse, comprising a device (2) for receiving at least two movable picking holders (3a, 3b) for said products, referred to as picking holders, and independent means (21a, 21b) for retaining each of said at least two picking holders on said autonomous mobile robot, **characterised in that** said reception device is adaptable to said picking holders.

2. Autonomous mobile robot for picking orders according to claim 1, **characterised in that** said reception device is removable.

3. Autonomous mobile robot for picking orders according to any one of claims 1 and 2, **characterised in that** said reception device has a modifiable structure for adapting to said picking holders.

4. Autonomous mobile robot for picking orders according to any one of claims 1 to 3, **characterised in that** said retaining means are carried by said reception device.

5. Autonomous mobile robot for picking orders according to any one of claims 1 to 4, **characterised in that** said retaining means are in the form of:
• a magnetic system cooperating with said picking holders;
• a mechanical system corresponding to retaining protrusions or tongues of said picking holders;
• a mechanical locking system cooperating with a part of said picking holders.

6. Autonomous mobile robot for picking orders according to any one of claims 1 to 5, **characterised in that** said reception device corresponds to a tubular or solid structure removably secured to said robot.

7. Autonomous mobile robot for picking orders according to any one of claims 1 to 6, **characterised in that** it comprises a module for detecting the depositing of at least one product in at least one of said movable picking holders.

8. Method for preparing orders for products stored in a warehouse by at least one autonomous mobile robot (10) according to any one of claims 1 to 7, **characterised in that** it comprises the following steps:
• depositing (41), by an order picker, at least one product (P1) of a first order in at least one first movable product picking holder (3a) carried by said at least one autonomous mobile robot (10);
• depositing (42), by an order picker, at least one product (P2) of a second order in at least one second movable product picking holder (3b) carried by said at least one autonomous mobile robot (10).

9. Method for preparing orders according to claim 8, **characterised in that** it comprises a step, implemented by said autonomous mobile robot (10), of detecting the depositing at least one product in at least one of said movable picking holders.
